# EUROPEAN PATENT SPECIFICATION

(11) **EP 1 342 589 B1**
(45) Date of publication and mention of the grant of the patent: **08.06.2005**
(21) Application number: 02100237.3
(22) Date of filing: 08.03.2002
(51) Int. Cl.: B44C 3/08, B44C 3/02, B60R 13/00, G09F 7/16

(54) **Emblem for motor vehicle and method of making same**
Kraftfahrzeugemblem sowie Verfahren zu seiner Herstellung
Emblème de véhicules à moteur et procédé pour sa fabrication

(43) Date of publication of application: 10.09.2003
(73) Proprietor: 3M Innovative Properties Company, St. Paul, Minnesota 55133-3427 (US)
(72) Inventor: Hamilton, Lesley, 3M Europe s.a., Hermeslaan 7, 1831 Diegem (BE); Hoppe, Helmut, 3M Europe s.a., Hermeslaan 7, 1831 Diegem (BE); Engler, Manfred, 3M Europe s.a., Hermeslaan 7, 1831 Diegem (BE)
(74) Representative: Voortmans, Gilbert J.L.

(56) References cited:
- EP-A- 0 965 489
- US-A- 3 773 568

## Description

### 1. Field of invention

The present invention relates to emblems having a three dimensional shape for motor vehicles, in particular for cars, trucks and vans. The present invention also relates to a method of making such emblems from a metal sheet, in particular from a sheet of aluminum. Further, the invention relates to a method for affixing the emblem to a motor vehicle and to a motor vehicle having the emblem affixed to it.

### 2. Background of the invention

Motor vehicles such as cars, trucks and vans are commonly provided with emblems carrying a brand or logo of the manufacturer of the motor vehicle. Such emblems may be of a three dimensional shape and are typically attached to the exterior of the body of the motor vehicle. For example, the emblem may have an oval and shallow concave shape such as for example the emblem used by Ford Company. Such an emblem is attached to a motor vehicle, for example by means of glue or an adhesive tape, with its concave side facing towards the body of the motor vehicle. The other side, i.e. the convex side of shape then forms the visible part of the emblem when attached to the body of the motor vehicle. This visible side of the emblem is typically provided with a graphic design such as for example a colored layer or the printing of a brand. A protective layer typically overlays the graphic design.

A method of forming car emblems is for example disclosed in US 3,773,568. According to the method there disclosed, a sheet of aluminum is first treated and subsequently provided with a colored resinous enamel image and a protective epoxy coating. Thereafter the sheet may be subjected to further mechanical operations to form the desired final emblem. It has however been found that such emblems when formed into three dimensional shapes suffer from a poor corrosion resistance. Furthermore, small cracks, so called micro-cracks, were observed in the protective coating. As a result, the emblem may loose its good appearance during the lifetime of the motor vehicle, which is particularly a concern with cars and vans.

### 3. Summary of the invention

The present invention provides a method for making an emblem (10) for motor vehicles, said method comprising in the order given, the steps of:
- providing a sheet of metal (5) having opposite first (15) and second (16) major surface;
- applying a desired graphics design (2) on a first major surface of said sheet;
- cutting and forming from said metal sheet (5) an emblem (10) having a three dimensional shape; and
- applying a protective coating (1) on said emblem over said graphics design (2) by spray coating or powder coating whereby said protective coating (1) extends over the edge between said first and second major surface.

Accelerated corrosion tests indicate that when the emblem is formed according to the method of the invention, the emblem will likely have little or no corrosion over the lifetime of the motor vehicle and substantially no cracks were observed in the protective coating. In particular, by applying the protective coating after cutting and forming of the emblem into the desired three dimensional shape, micro cracks can be avoided. Moreover, by using spray coating or powder coating to apply the protective coating, the edges, which typically correspond to the thickness of the initial metal sheet, between the first and second major surface are provided with the protective coating as well. It is believed that this provides for a superior corrosion resistance of the metal emblem.

Thus, in accordance with a further aspect of the present invention there is also provided an emblem (10) having a three dimensional shape for attaching to a motor vehicle, said emblem (10) being made of metal and having a first major surface (15) and an opposite second major surface (16), said first major surface (15) having a graphics design (2) forming the visible part of said emblem (10) when attached to the motor vehicle, wherein said first major surface (15) comprises a protective coating (1) on said graphics design (2) and wherein said protective coating (1) extends over the edge (12) between said first and second major surfaces.

In another aspect, the present invention relates to a method of providing a motor vehicle with a three dimensional emblem, comprising the steps of affixing the emblem of the invention to the exterior body of said motor vehicle.

Still further, the invention provides a motor vehicle comprising the three dimensional emblem of the invention affixed to its exterior body.

### 4. Brief description of the drawings

The invention is further described by way of reference to the following drawings which are merely intended to illustrate the invention and which should not be taken to limit the invention in any way.

Figure 1 shows a schematic drawing of an embodiment of a three dimensional emblem according to the invention.
Figure 2 shows a cross-section along the line A-A of the emblem of figure 1.

### 5. Detailed description of the invention

In accordance with the method of making the 3-D emblem, a metal sheet is first provided. The metal sheet can be any metal as can be used for making emblems for motor vehicles, in particular cars. Typically, the metal sheet will be a sheet of aluminum but other metal sheets such as a steel sheet may also be used. The thickness of the sheet will generally be between 0.5mm and 1mm. The sheet may be first treated so as to improve the adhesions of coatings, in particular paint coatings thereto. For example, when the sheet is made of aluminum, it may be treated as disclosed in US 3,773,568.

To a first major side of the metal sheet is then applied a graphics design. The graphic design may include letters, numbers or any other indicia such as images and icons. The graphics design may be comprised of a single layer or multiple layers. Typically, the layer or layers making up the graphics design will comprise dyes or color pigments. Also, the layer or layers of the graphics design will typically include one or more polymers such as for example an alkyd based polymer, an acrylic polymer or a polyurethane. The graphics design may be applied by any desired technique for applying graphics designs. For example, a printed design may be applied by screen printing, pad or tampon printing or etching. Before the application of the layers making up the graphics design, it will generally be preferred to apply one or more primers that will improve the adhesion of the graphics design to the metal sheet.

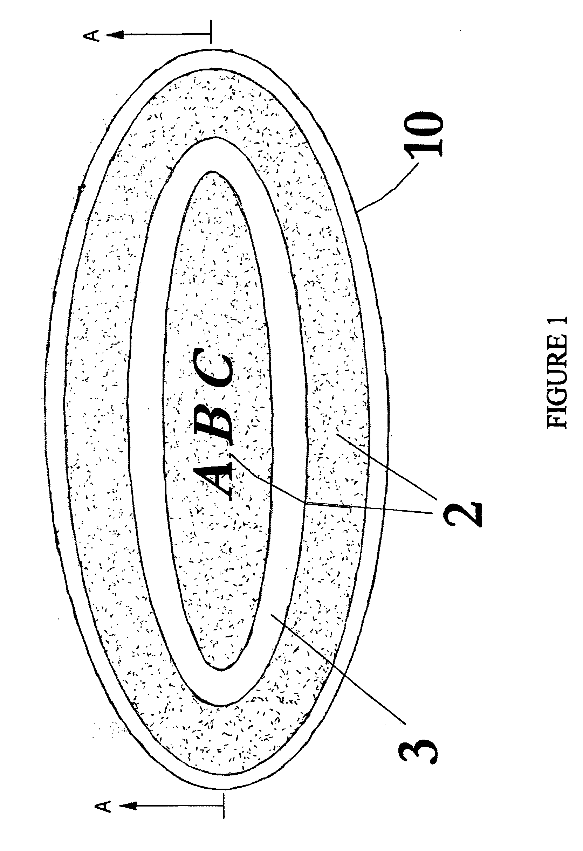

Subsequent to the application of the graphic design the emblem is formed out of the metal sheet by cutting and forming it in the desired 3D shape. For example, with an appropriate tool, an oval and convex emblem (10) as shown in figure 1 may be cut and formed out of the metal sheet whereby the graphics design is on the convex side of the emblem. When viewed from the opposite side, the emblem is concave. Typically the concave is a shallow concave, for example a depth of between 1 and 10 mm. The emblem may also be further embossed. Such embossing can be carried out before or after cutting and forming of the emblem from the metal sheet. Preferably however, embossing is carried out simultaneously with forming and cutting of the emblem from the metal sheet. In order to protect the graphic design during handling and forming of a 3D shape for the emblem from the metal sheet, a temporary protective film may be laminated over the graphic design prior to forming and cutting of the emblem from the metal sheet. For this purpose, one can use for example a polyethylene based film which can be cold laminated to the metal sheet. After the cutting and forming operation, the temporary protective film needs to be removed.

Following forming and cutting of the emblem, the emblem is provided with a protective coating over the graphics design. The protective coating is generally clear and transparent and is generally comprised of a resin. The protective coating may also be tinted. Typically, a hard curable resin such as a curable acrylic resin or an epoxy resin is used for the protective coating. The thickness of the protective coating will generally be between 30 µm and 150 µm, preferably between 50 µm and 100 µm. The protective coating is applied by spray coating or powder coating.

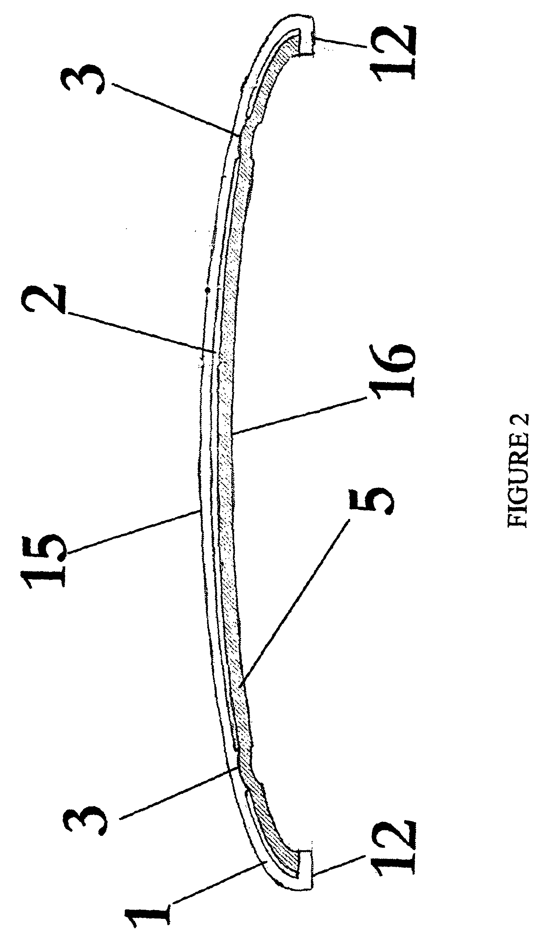

When spray coating is applied, the coating composition for the protective layer may comprise the resin dissolved in a solvent or alternatively, the resin for the protective coating may be a hot melt resin in which case a solvent can be avoided During spray coating, the emblem is supported from its backside, i.e. the side opposite to the side bearing the graphic design. Spraying may be carried out manually or through the use of a robotic sprayer. The emblem should be sprayed in such a way as to cover the complete graphic design. Also spraying should extend over the edges between the first major surface of the emblem carrying the design and the second major surface forming the backside of the emblem. Thus, as can be seen in figure 2, the protective coating will thereby extend over edge (12) between the convex and concave side of the emblem (10).

In accordance with a preferred embodiment, the protective coating is applied by powder coating. Powder coating is an electrostatic spray coating process wherein a coating powder is dispersed in an air stream and passed through a corona discharge field where the powder particles acquire electrostatic charge. The particles are attracted to and deposited on a grounded object to be coated. Thus, by grounding the emblem, it can be powder coated with the protective coating. Powder coating of the emblem typically also involves melting or fusing of the powder particles by heating so that the powder particles form a film or coating. Heating is typically carried out using an oven, e.g. a convection oven. Alternative heating techniques may include, infrared heating, resistance heating and induction heating methods. To coat the emblem using powder coating, the emblem is placed on a jig or is otherwise supported from its backside whereby care is taken not to cover the edges of the emblem between the first and second major surface of the emblem. The emblem is then electrostatically sprayed with a powder coating for the protective layer whereby the powder is deposited on the first major surface of the emblem. Also, it has been found that the powder also deposits at edge (12) between the opposite first and second major surfaces of the emblem (10). Electrostatic spraying is generally carried out at room temperature. After spraying, the emblem is subjected to heat by for example placing it in an oven to thereby cause the powder particles to melt so as to form a film of protective coating.

Using the method of the invention, an emblem as shown in figures 1 and 2 can be formed. As shown in figure 1, the emblem (10) has an oval shape and as can be appreciated from the cross-section shown in figure 2, the emblem (10) is convex. The first major surface (15) is at the convex side of emblem (10) and opposite thereto is the second major surface (16) at the concave side of emblem (10). The depth of the concave of emblem (10) is typically between 1 mm and 10 mm. Between the first and second major surface is edge 12 which connects the opposite major surfaces to each other. The edge (12) typically corresponds to the thickness of the metal sheet used to form the emblem. Emblem (10) further includes an embossing as shown by numeral (3). On the first major surface of the metal sheet (5), there is provided a graphics design formed by a printed layer (2) and overlaying the printed layer (2) there is a protective coating (1). As seen in figure (2), the protective coating (1) extends over the edge (12) between first and second major surfaces of the emblem (10). The protective coating (1) may also extend over the part of the second major surface (16).

The emblem, for example the emblem (10) of figure 1 may be affixed to the exterior body of a motor vehicle, in particular a car or a van. The exterior body of motor vehicle may be adapted for receiving and positioning of the emblem. For example, with emblem (10), the exterior body may comprise an elliptical groove or recess corresponding to the dimensions of the oval shape of emblem (10). Alternatively, the exterior body may comprise a raised portion that corresponds to the dimensions of the concave side of emblem (10) so that emblem (10) can be placed over the raised portion. The emblem will typically be affixed to the motor vehicles exterior body by means of a glue, for example a pressure sensitive adhesive or a hot melt glue, or by using an adhesive tape such as for example a double coated acrylic foam tape.

The following examples further illustrate the invention and are not intended to limit the invention in any way.

### EXAMPLES

### Test Method - Corrosion Resistance

Completed emblem was exposed to a thermal cycle (10 cycles) in combination with a Copper-Accelerated Acetic Acid-Salt treatment. This corresponds to test method ASTM (American Society for Testing and Materials) method # B 368 - 97. After the test was completed, the emblems were examined visually to observe whether corrosion was present, particularly corrosion visibly starting from the emblem edges. Corrosion absence or presence was noted. Corrosion that occurred in areas on the back of the emblem that were not protected was discounted.

Top surfaces of the emblems were also evaluated for the presence of cracks and corrosion.

### Example 1

A bright-finished aluminum sheet (0.65 mm thickness) having the dimensions of 173 cm x 457 mm was obtained from Baco Metal Centres (Tipton, UK). The aluminum sheet was degreased and activated by passing through a caustic soda bath, then rinsed with water and air dried. One surface of the aluminum sheet was then primed by applying a coating of a solvent -based terpolymer of polyvinyl butyral, polyvinyl alcohol, and polyvinylacetate available as SVP2003 from Development Associates Inc. (North Kingstown, Connecticutt, USA.) in a thickness of approximately 2-3 µm. The primer coating was then cured at a temperature of 60 °C for about 1 minute.

The primed surface of the aluminum sheet was then printed employing a screen printing process using a blue alkyd-based screen-printing ink (available as product number SSTL86740 from Gibbon Inks and Coatings Wimbledon, UK) in the shape of a graphic representing the logo design of the Ford Motor Company. The sheet was printed in a fashion to give one row of six separate graphic areas corresponding with the positions from which emblems were to be finally cut. The screen-printing ink was dried in a forced-air oven at a temperature 160° C for 20 minutes.

A blue-tinted transparent polyethylene-based polymeric film having a thickness of 0.05 mm was cold laminated over the surface of the graphic and covering the entire sheet for temporary protection of the graphic from scratching during cutting and forming operations.

The six individual emblems were then cut out of the sheet in the shape of an oval having a length of approximately 120 mm long and 55 mm wide, each bearing the Ford Motor Company logo.

The largely flat pieces were then formed into a shallow convex shape using a cold-forming tool. At the same time the areas corresponding to the Ford logo design were embossed. The temporary protective polyethylene-based film was then removed from the graphic-bearing surface.

The pieces were then mounted individually on a support rod or jig and finally spray-coated using a robotic sprayer to provide a continuous coating covering the top surface of the emblem bearing the printing, the cut edges of the emblems and portions of the back side of the emblem not masked by the jig. The coating comprised a solvent-based one pack acrylic melamine obtained as RK-O121 B Super Mar from DuPont (Wilmington, Delaware, US). The clear, colorless coating was then dried for 30 minutes at 140° C in a forced air oven to provide a dry coating thickness of approximately 50 µm.

The completed emblem was then tested for corrosion resistance as described above. Test results showed that no corrosion was present at the edges or on the top surface of the emblem. Additionally, no evidence of cracks on the printed surface could be observed.

### Example 2

Example 1 was repeated with the exception that the final protective coating was applied to the printed and formed emblem employing powder-coating techniques.

The individual emblems were supported on jigs on a continuous transport belt. The emblems was then passed through a powder coating zone where a controlled deposition of electrostatic charged powder paint particles took place. The emblems were fully coated with powder with the exception of the small area on the back of the emblem masked by the supporting jig. The powder coating comprised a polyurethane/epoxy.

The powder-coated emblems were then passed through an oven held at 200 °C for 5 minutes to cure the powder coating and bond it to the emblem to form a continuous protective coating. The thickness of the protective coating was approximately 100 µm.

Completed emblems were corrosion tested and inspected as described under the test method above. Test results showed that no corrosion was present at the edges or on the top surface. Additionally, no evidence of cracks on the printed surface could be found.

## Claims

1. Method for making an emblem for motor vehicles, said method comprising in the order given, the steps of:
(a) providing a sheet of metal (5) having opposite first (15) and second (16) major surface;
(b) providing a desired graphics design (2) on a first major surface (15) of said sheet;
(c) cutting and forming from said sheet an emblem (10) having a three dimensional shape; and
(d) applying a protective coating (1) on said emblem over said graphics design by spray coating or powder coating whereby said protective coating extends over the edge (12) between said first (15) and second (16) major surface.

2. Method according to claim 1 wherein prior to the application of said graphics design, a prime coating is applied to said first major surface of said metal sheet.

3. Method according to said claim 1 wherein said three dimensional shape of said emblem comprises a convex whereby the convex side is formed by said first major surface.

4. Method according to any of the previous claims wherein prior to, during or after forming said one or more emblems, a design is embossed on said first major surface of said metal sheet.

5. Method according to any of the previous claims wherein said metal is selected from aluminum and steel.

6. Emblem (10) having a three dimensional shape for attaching to a motor vehicle, said emblem being made of a sheet of metal and having a first major surface (15) and an opposite second major surface (16), said first major surface having a graphics design (2) and forming the visible part of said emblem when attached to the motor vehicle, wherein said first major surface (15) comprises a protective coating (1) applied by spray coating or powder coating on said graphics design (2) and wherein said protective coating extends over the edge (12) between said first (15) and second (16) major surfaces.

7. Emblem according to claim 6 wherein said emblem comprises a convex whereby the convex side is formed by said first major surface.

8. Emblem according to claim 7 wherein said metal is aluminum or steel.

9. Method of providing a motor vehicle with a three dimensional emblem, comprising the steps of affixing the emblem of any of claims 6 to 8 to the exterior body of said motor vehicle.

10. Motor vehicle comprising a three dimensional emblem of any of claims 6 to 8 affixed to its exterior body.

## Patentansprüche

1. Verfahren zur Herstellung eines Emblems für Kraftfahrzeuge mit den folgenden Schritten in der gegebenen Reihenfolge:
(a) Bereitstellen einer Metalltafel (5) mit einer ersten (15) und einer zweiten (16) Hauptfläche, die sich gegenüberliegen;
(b) Bereitstellen eines gewünschten graphischen Designs (2) auf einer ersten Hauptfläche (15) der Tafel;
(c) Schneiden und Formen eines Emblems (10) mit dreidimensionaler Form aus der Tafel; und
(d) Aufbringen eines Schutzüberzugs (1) auf dem Emblem über das graphische Design durch Spritzbeschichten oder Pulverbeschichten, wodurch sich der Schutzüberzug über den Rand (12) zwischen der ersten (15) und der zweiten (16) Hauptfläche erstreckt.

2. Verfahren nach Anspruch 1, wobei vor dem Aufbringen des graphischen Designs eine Grundierung auf die erste Hauptfläche der Metalltafel aufgebracht wird.

3. Verfahren nach Anspruch 1, wobei die dreidimensionale Form des Emblems eine Konvexität aufweist, wobei die konvexe Seite durch die erste Hauptfläche gebildet wird.

4. Verfahren nach einem der vorhergehenden Ansprüche, wobei vor, während oder nach der Herstellung eines oder mehrerer Embleme ein Design auf die erste Hauptfläche der Metalltafel geprägt wird.

5. Verfahren nach einem der vorhergehenden Ansprüche, wobei das Metall unter Aluminium und Stahl ausgewählt wird.

6. Emblem (10) mit einer dreidimensionalen Form zur Befestigung an einem Kraftfahrzeug, wobei das Emblem aus einer Metalltafel hergestellt ist und eine erste Hauptfläche (15) und eine gegenüberliegende zweite Hauptfläche (16) aufweist, wobei die erste Hauptfläche ein graphisches Design (2) aufweist und den sichtbaren Teil des Emblems bildet, wenn es am Kraftfahrzeug befestigt ist, wobei die erste Hauptfläche (15) einen Schutzüberzug (1) aufweist, der durch Spritzbeschichtung oder Pulverbeschichtung auf dem graphischen Design (2) aufbracht ist, und wobei sich der Schutzüberzug über den Rand (12) zwischen der ersten (15) und der zweiten (16) Hauptfläche erstreckt.

7. Emblem nach Anspruch 6, das eine Konvexität aufweist, wobei die konvexe Seite durch die erste Hauptfläche gebildet wird.

8. Emblem nach Anspruch 7, wobei das Metall Aluminium oder Stahl ist.

9. Verfahren zum Ausstatten eines Kraftfahrzeugs mit einem dreidimensionalen Emblem, das die Schritte des Befestigens des Emblems nach einem der Ansprüche 6 bis 8 an der Außenkarosserie des Kraftfahrzeugs umfasst.

10. Kraftfahrzeug mit einem an seiner Außenkarosserie befestigten dreidimensionalen Emblem nach einem der Ansprüche 6 bis 8.

## Revendications

1. Procédé de fabrication d'un emblème de véhicule automobile, ledit procédé comprenant, dans l'ordre donné, les étapes consistant à :
(a) fournir une tôle de métal (5) ayant des première (15) et deuxième (16) grandes surfaces opposées ;
(b) fournir un dessin graphique souhaité (2) sur une première grande surface (15) de ladite tôle ;
(c) découper et former à partir de ladite tôle un emblème (10) ayant une forme tridimensionnelle ; et
(d) appliquer un revêtement protecteur (1) sur ledit emblème par-dessus ledit dessin graphique par revêtement par pulvérisation ou par revêtement en poudre, ledit revêtement protecteur s'étendant par-dessus le bord (12) entre lesdites première (15) et deuxième (16) grandes surfaces.

2. Procédé selon la revendication 1, dans lequel, avant l'application dudit dessin graphique, on applique un revêtement d'apprêt à ladite première grande surface de ladite tôle.

3. Procédé selon la revendication 1, dans lequel ladite forme tridimensionnelle dudit emblème comprend un côté convexe, le côté convexe étant formé par ladite première grande surface.

4. Procédé selon l'une quelconque des revendications précédentes, dans lequel avant, pendant ou après le formage dudit ou desdits emblèmes, un dessin est gaufré sur ladite première grande surface de ladite tôle métallique.

5. Procédé selon l'une quelconque des revendications précédentes, dans lequel ledit métal est sélectionné parmi l'aluminium et l'acier.

6. Emblème (10) ayant une forme tridimensionnelle, destiné à être fixé à un véhicule automobile, ledit emblème étant fabriqué à partir d'une tôle de métal et ayant une première grande surface (15) et une deuxième grande surface opposée (16), ladite première grande surface ayant un dessin graphique (2) et formant la partie visible dudit emblème lorsqu'il est fixé sur le véhicule automobile, ladite première grande surface (15) comprenant un revêtement protecteur (1) appliqué par revêtement par pulvérisation ou par revêtement en poudre sur ledit dessin graphique (2) et ledit revêtement protecteur s'étendant par-dessus le bord (12) entre lesdites première (15) et deuxième (16) grandes surfaces.

7. Emblème selon la revendication 6, dans lequel ledit emblème comprend un côté convexe, le côté convexe étant formé par ladite première grande surface.

8. Emblème selon la revendication 7, dans lequel ledit métal est de l'aluminium ou de l'acier.

9. Procédé pour pourvoir un véhicule automobile d'un emblème tridimensionnel, comprenant l'étape consistant à fixer l'emblème selon l'une quelconque des revendications 6 à 8 à la carrosserie extérieure dudit véhicule automobile.

10. Véhicule automobile comprenant un emblème tridimensionnel selon l'une quelconque des revendications 6 à 8, fixé sur sa carrosserie extérieure.
